# DEMANDE DE BREVET EUROPEEN

(11) **EP 1 746 246 A1**
(43) Date de publication de la demande: **24.01.2007**
(21) Numéro de dépôt: 06014660.2
(22) Date de dépôt: 14.07.2006
(51) Int. Cl.: E06B 9/68, H05B 37/02, G01J 1/04

(54) **Dispositif domotique de mesure ou de détection de luminosité destiné à être monté à proximité d'un vitrage**

(30) Priorité: 18.07.2005 FR 0507601
(71) Demandeur: Somfy SAS, 74300 Cluses (FR)
(72) Inventeur: Thomas Dieter, 78112 Sankt-Georgen (DE)
(74) Mandataire: Bugnion Genève

(57) **Abrégé**

Le dispositif domotique (40) de mesure ou de détection de luminosité comprend une alimentation (10), un capteur de luminosité (8) et un moyen (11) d'émission de signaux de communication pour envoyer des informations à un dispositif de protection solaire motorisé. Il est caractérisé en ce qu'il comprend une première partie (5) destinée à être positionnée de manière fixe par rapport à un vitrage et liée mécaniquement à une deuxième partie (6) comprenant au moins un élément du capteur de luminosité (8), la deuxième partie étant mobile par rapport à la première partie.

## Description

L'invention concerne un dispositif domotique de mesure ou de détection de luminosité défini selon le préambule de la revendication 1.

Les dispositifs de protection solaire motorisés sont utilisés pour réguler ou limiter l'intensité des radiations lumineuses traversant les vitrages de fenêtres, de baies ou de portes dans les bâtiments. Des dispositifs de mesure ou de détection de luminosité disposés à l'intérieur des bâtiments et mesurant la luminosité traversant les vitrages des bâtiments sont alors utilisés pour piloter les actionneurs de tels dispositifs de protection solaire en fonction de la luminosité.

On connaît du brevet US 6,082,894 un dispositif de détection, notamment de détection infrarouge. Le dispositif comprend un boîtier en deux parties, une première partie montée fixe et une deuxième partie articulée sur la première partie grâce à une charnière. Une carte électronique est également articulée par rapport à la première partie grâce à cette charnière.

Dans le but de limiter les opérations de câblage lors de l'installation de tels dispositifs, il est connu, par exemple de la demande EP 0 687 794, d'utiliser un dispositif de mesure ou de détection de luminosité comprenant des moyens de communication sans fil avec un dispositif de protection solaire motorisée.

Dans le but de limiter encore les opérations de câblage, il est connu, par exemple du modèle d'utilité DE 299 23 046 U, d'utiliser un dispositif de mesure ou de détection de luminosité qui est de plus autonome. Un tel dispositif comprend soit un moyen d'accumulation d'énergie électrique et une batterie d'accumulateur ou un condensateur, soit une pile pour alimenter ses circuits électroniques. Ce dispositif est monté à l'intérieur du bâtiment sur le vitrage au moyen d'une ventouse de manière à ce qu'il puisse être déplacé. Un tel dispositif permet de mesurer les rayons lumineux traversant le vitrage de l'extérieur vers l'intérieur du bâtiment.

Le dispositif présente plusieurs inconvénients. D'abord, la fixation par ventouse n'est pas très fiable et il peut arriver que le dispositif se décroche. Dans ce cas, outre des risques d'endommagement du dispositif, celui-ci n'assure plus sa fonction jusqu'à ce que l'utilisateur vienne le remettre en place. Ensuite, la forme ronde de la ventouse implique des contraintes sur la forme du dispositif et le rend peu esthétique. De plus, la fixation du dispositif est peu pratique. Elle impose son démontage avant le nettoyage du vitrage et son remontage et repositionnement après. Elle impose également son démontage, son remontage et son repositionnement périodique pour tenir compte de l'angle d'incidence des rayons solaires variant avec les saisons. Ces opérations sont indispensables si l'on veut disposer d'une protection solaire qui soit efficace toute l'année, c'est-à-dire qui assure un niveau de luminosité suffisant dans le bâtiment tout en évitant que cette luminosité soit telle que les occupants du bâtiment soient éblouis.

D'autres dispositifs utilisant des moyens adhésifs de fixation au vitrage en substitution d'une ventouse présentent sensiblement les mêmes inconvénients.

Le but de l'invention est de fournir un dispositif domotique de mesure ou de détection de luminosité palliant aux inconvénients précités et présentant des améliorations par rapport aux dispositifs connus de l'art antérieur. L'invention propose un dispositif présentant un moyen de fixation fiable qui permette de disposer un capteur de lumière à proximité immédiate d'un vitrage et qui permette un nettoyage aisé du vitrage et un repositionnement périodique aisé.

Le dispositif domotique de mesure ou de détection de luminosité selon l'invention est caractérisé par la partie caractérisante de la revendication 1.

Différents modes de réalisation du dispositif domotique selon l'invention sont définis par les revendications dépendantes 2 à 9.

Le dessin annexé représente, à titre d'exemples, des modes de réalisation d'un dispositif selon l'invention.

La figure 1 est un schéma d'une installation comprenant un dispositif de protection solaire motorisé et un dispositif de mesure ou de détection de luminosité selon l'invention.

La figure 2 est un schéma d'un premier mode de réalisation du dispositif selon l'invention.

Les figures 3A à 3C sont des schémas de différents modes de réalisation du dispositif selon l'invention.

Les figures 4A et 4B sont des schémas d'un autre mode de réalisation du dispositif selon l'invention.

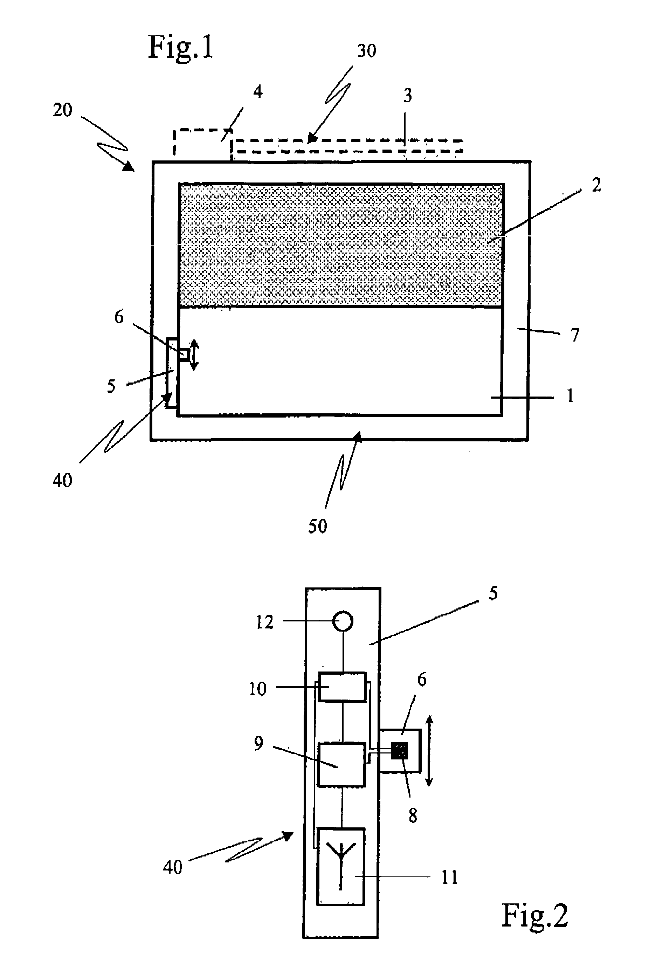

L'installation 20 représentée à la figure 1 comprend un dispositif de protection solaire motorisé 30 et un dispositif de mesure ou de détection de luminosité 40 et équipe une fenêtre 50.

Le dispositif 30 de protection solaire motorisé comprend une unité électronique de commande 4 pilotant un moteur 3 entraînant un élément mobile de protection solaire 2. L'élément de protection solaire 2 représenté est un volet roulant. Il peut cependant également consister en un store ou tout autre écran susceptible de limiter le rayonnement lumineux pénétrant dans le bâtiment à travers le vitrage 1 de la fenêtre 50.

Le dispositif de mesure ou de détection de luminosité émet des signaux à destination de l'unité électronique de commande du moteur de manière à manoeuvrer l'élément de protection solaire en fonction de la luminosité mesurée ou détectée. II est possible de transférer certaines fonctions de l'unité électronique de commande dans le dispositif de mesure ou de détection de luminosité. Ce peut notamment être le cas de programmes de fonctionnement de l'installation définissant dans quelles conditions de luminosité l'élément de protection solaire doit être manoeuvré dans un sens ou dans l'autre.

Le dispositif 40 de mesure ou de détection de luminosité 40 comprend principalement une partie fixe 5 à laquelle est mécaniquement liée une partie mobile 6.

La partie mobile 6 comprend un capteur de luminosité 8 (non représenté sur la figure 1, mais représenté sur la figure 2). Elle peut être déplacée par rapport à la partie fixe 5 par simple action mécanique manuelle de l'utilisateur sur celle-ci. Une fois déplacée dans une position, la partie mobile conserve cette position tant que l'utilisateur n'exerce pas de nouvelle action sur celle-ci.

La partie fixe est fixée par exemple à l'aide de vis, d'un moyen adhésif ou tout autre moyen au cadre 7 du vitrage 1 ou à la structure du bâtiment à proximité de la fenêtre, par exemple à l'appui de fenêtre. Le dispositif 40 peut également être fixé directement sur le vitrage 1 par collage ou par le biais d'une ventouse. Il peut être monté à l'extérieur du bâtiment bien qu'il soit préférable qu'il soit monté à l'intérieur. La partie fixe 5 est fixée de manière à ce que dans au moins certaines positions de la partie mobile 6, le capteur de luminosité 8 puisse, depuis l'intérieur du bâtiment, capter des rayons lumineux traversant le vitrage de l'extérieur vers l'intérieur du bâtiment.

Par exemple, dans le dispositif de mesure ou de détection de luminosité représenté à la figure 1, la partie mobile 6 est liée mécaniquement à la partie fixe 5 par le biais d'une glissière linéaire, le capteur de luminosité 8 pouvant ainsi être déplacé verticalement devant le vitrage. Dans ce cas, on positionne le capteur de luminosité 8 en position haute en hiver lorsque le soleil est bas et en position basse en été lorsque le soleil est haut.

Comme représenté à la figure 2, le dispositif de mesure ou de détection de luminosité comprend une alimentation 10, une unité logique de traitement 9 telle qu'un microcontrôleur, des moyens 11 d'émissions de signaux électromagnétiques tels que par exemple des moyens d'émission d'ondes radioélectriques et le capteur de luminosité 8 précédemment évoqué. Seul le capteur de luminosité 8 ou un des éléments le constituant doit nécessairement être monté dans la partie mobile 6 du dispositif 40. Tous les autres composants peuvent indifféremment être montés dans la partie fixe ou dans la partie mobile, cependant, il est préférable pour des questions d'esthétique que seul le capteur de luminosité ou un des éléments le constituant soit monté dans la partie mobile.

Le capteur de luminosité peut notamment comprendre un composant électronique photosensible tel qu'une photo-diode, une cellule photovoltaïque ou un photo-transistor. Il peut en outre comprendre une fibre optique ou tout autre dispositif de guidage et/ou de renvoi de rayons lumineux (tel qu'un système à prisme) pour diriger des rayons lumineux vers le composant électronique photosensible. Le capteur de luminosité peut être protégé par un capot en matière transparente telle que du plastique ou du verre.

L'alimentation 10 fournit l'énergie électrique nécessaire au fonctionnement de l'unité logique de traitement 9, des moyens d'émissions de signaux et, si celui-ci le requiert au capteur de luminosité. Elle comprend par exemple une pile ou un panneau photovoltaïque associé à un moyen de stockage d'énergie électrique. L'alimentation peut aussi comprendre un convertisseur pour transformer l'énergie électrique du secteur en énergie utilisable par les circuits du dispositif de mesure ou de détection 40.

Le dispositif de mesure ou de détection peut également comprendre un moyen de réglage 12. Ce moyen peut consister en un bouton pour régler des seuils de luminosité déclenchant des manoeuvres de l'élément de protection solaire.

Le dispositif de mesure ou de détection 40 peut en outre comprendre des capteurs auxiliaires tels que des capteurs de bris de vitrage, de bruit, d'humidité ou de gaz. En combinant, les informations fournies par l'ensemble des capteurs, on peut commander les manoeuvres de l'élément de protection solaire selon des lois plus complexes.

Le dispositif de mesure ou de détection de luminosité peut permettre la manoeuvre de l'élément de protection solaire en fonction de la présence de soleil, en fonction du lever et du coucher du soleil ou en fonction d'une horloge. Il peut en outre permettre d'effectuer des opérations de réglage de fins de course et de position intermédiaire.

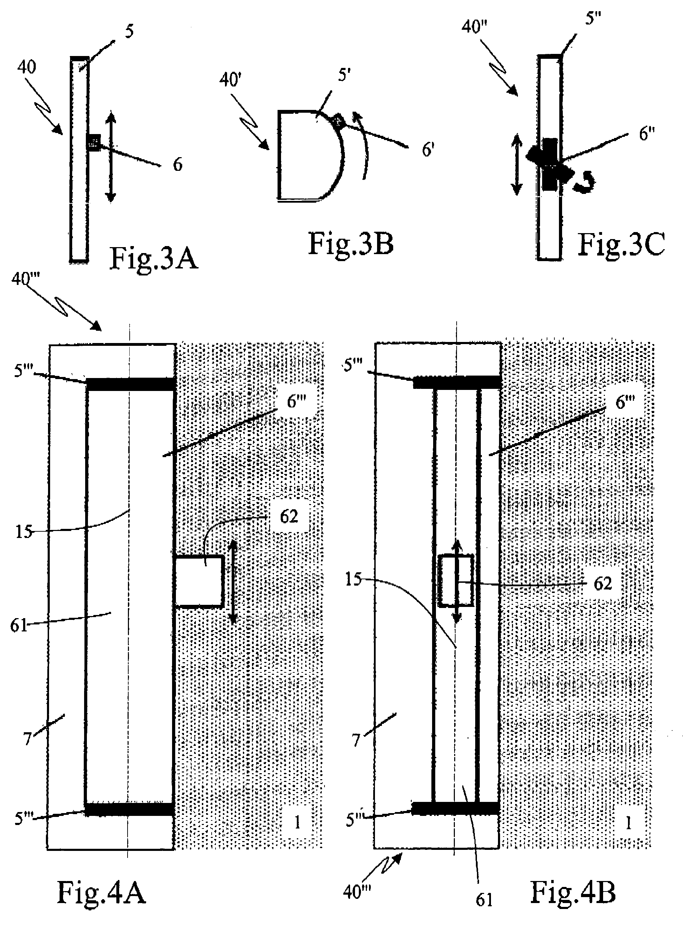

Dans le mode de réalisation du dispositif de mesure et de détection de luminosité représenté à la figure 3A, la partie mobile 6 peut être déplacée linéairement par rapport à la partie fixe 5 grâce à une glissière.

Dans le mode de réalisation du dispositif de mesure et de détection de luminosité représenté à la figure 3B, la partie mobile 6' peut être déplacée en rotation par rapport à la partie fixe 5' grâce à une liaison pivot.

Dans le mode de réalisation du dispositif de mesure et de détection de luminosité représenté à la figure 3C, la partie mobile 6" peut être déplacée en translation et en rotation par rapport à la partie fixe 5" grâce à une combinaison d'une glissière et d'une liaison pivot.

Le mouvement de rotation de la partie mobile est notamment intéressant lorsque le dispositif est destiné à équiper une fenêtre de toit.

Il est clair qu'on peut prévoir entre la partie fixe et la partie mobile toute liaison mécanique ou toute combinaison de liaisons mécaniques permettant de laisser libres les degrés de liberté nécessaires pour positionner correctement et aisément le capteur de luminosité en fonction de la saison et de l'orientation de l'ouverture équipée du dispositif de mesure et de détection de luminosité et pour le dégager de devant la vitre lors d'opérations de nettoyage.

Le mode de réalisation du dispositif 40"' de mesure et de détection de luminosité représenté aux figures 4A et 4B comprend des fixations 5"' solidaires du cadre 7 du vitrage. Entre ces fixations, est articulé autour d'un axe 15, un carter 6"' comprenant tous les circuits électroniques du dispositif de mesure et de détection de luminosité et contenant a fortiori le capteur de luminosité 8. Ce carter 6"' comprend deux parties 61 et 62 liées mécaniquement par une liaison glissière, la partie 62 comprenant au moins une partie du capteur de luminosité et la partie 61 étant liée par une liaison pivot par rapport aux fixations 5"'. Dans la position du carter 6'" représentée à la figure 4A, la partie 62 est devant le vitrage. Dans la position du carter 6"' représentée à la figure 4B, aucune partie du carter n'est devant le vitrage. Ainsi, lorsqu'un tel dispositif équipe une fenêtre dont on veut laver le vitrage, il suffit de le faire pivoter autour de son axe 15 avant l'opération de lavage, puis de le rabattre après l'opération de lavage.

Dans une variante de ce mode de réalisation, les parties 61 et 62 peuvent être solidaires l'une de l'autre, le mouvement de translation étant supprimé.

Le dispositif décrit précédemment équipe une fenêtre. Il est cependant clair qu'il peut équiper tout autre type d'ouverture vitrée telle qu'une porte ou une baie.

Grâce au dispositif selon l'invention, le capteur de luminosité peut être disposé quelques centimètres voire quelques millimètres derrière le vitrage. De préférence, le capteur de luminosité est disposé à moins de 5 centimètres du vitrage.

Par « un objet est devant le vitrage », on entend que l'ensemble des points formant l'image du contour de l'objet par une projection orthogonale sur le vitrage est non vide.

Par « un objet n'est pas devant le vitrage », on entend que l'ensemble des points formant l'image du contour de l'objet par une projection orthogonale sur le vitrage est vide.

## Revendications

1. Dispositif domotique (40; 40' ; 40" ; 40"') de mesure ou de détection de luminosité comprenant une alimentation (10), un capteur de luminosité (8) et un moyen (11) d'émission de signaux de communication pour envoyer des informations à un dispositif (30) de protection solaire motorisé, le dispositif domotique étant destiné à être monté à proximité d'un vitrage (1) afin que le capteur puisse capter des rayons lumineux traversant le vitrage, **caractérisé en ce qu'**il comprend une première partie (5; 5'; 5" ; 5"') destinée à être positionnée de manière fixe par rapport au vitrage (1) et liée mécaniquement à une deuxième partie (6 ; 6' ; 6" ; 6"') comprenant au moins un élément du capteur de luminosité (8), la deuxième partie étant mobile par rapport à la première partie.

2. Dispositif selon la revendication 1, **caractérisé en ce que** la deuxième partie est mobile selon plusieurs degrés de liberté par rapport à la première partie.

3. Dispositif selon la revendication 1, **caractérisé en ce que** la deuxième partie est mobile en translation par rapport à la première partie.

4. Dispositif selon la revendication 1 ou 3, **caractérisé en ce que** la deuxième partie est mobile en rotation par rapport à la première partie.

5. Dispositif selon l'une des revendications précédentes, **caractérisé en ce que**, dans au moins une première position de la deuxième partie par rapport à la première partie, aucune portion de la deuxième partie n'est devant le vitrage alors que, dans au moins une deuxième position de la deuxième partie par rapport à la première partie, une portion de la deuxième partie est devant le vitrage, cette portion comprenant au moins un élément du capteur de luminosité.

6. Dispositif selon l'une des revendications précédentes, **caractérisé en ce qu'**il comprend un capteur auxiliaire.

7. Dispositif selon la revendication précédente, **caractérisé en ce que** le capteur est un capteur de bruit ou un capteur de bris de vitrage ou un capteur d'humidité ou un capteur de gaz.

8. Dispositif selon l'une des revendications précédentes, **caractérisé en ce qu'**il comprend des moyens matériels (9) et logiciels pour traiter les signaux issus du capteur de luminosité et pour générer des signaux de commande du dispositif motorisé de protection solaire en conséquence.

9. Dispositif selon la revendication précédente, **caractérisé en ce qu'**il comprend des moyens matériels et logiciels (9) pour traiter les signaux issus du capteur auxiliaire et pour générer des signaux de commande du dispositif motorisé de protection solaire en conséquence.
